# EUROPÄISCHE PATENTSCHRIFT

(11) **EP 1 877 272 B1**
(45) Veröffentlichungstag und Bekanntmachung des Hinweises auf die Patenterteilung: **28.07.2010**
(21) Anmeldenummer: 06742275.8
(22) Anmeldetag: 25.04.2006
(51) Int. Cl.: B60J 10/12, B60J 10/00

(54) **DICHTUNG FÜR EIN GLASDACH MIT MINDESTENS ZWEI GLASDECKELN**
SEAL FOR A GLASS ROOF WITH AT LEAST TWO GLASS COVERS
JOINT DE TOIT VITRE DOTE D'AU MOINS DEUX COUVERCLES DE VERRE

(30) Priorität: 29.04.2005 DE 202005006879 U
(43) Veröffentlichungstag der Anmeldung: 16.01.2008
(73) Patentinhaber: Webasto AG, 82131 Stockdorf (DE)
(72) Erfinder: NOLLES, Dennis Rinse, 81245 München (DE)
(74) Vertreter: Bosch, Matthias
(86) Internationale Anmeldenummer: PCT/DE2006/000732
(87) Internationale Veröffentlichungsnummer: WO 2006/116971

(56) Entgegenhaltungen:
- EP-A- 1 063 113
- DE-A1- 10 255 365
- DE-A1- 10 306 781
- DE-U1- 29 724 476

## Beschreibung

Die Erfindung betrifft ein Glasdach mit mindestens zwei Glasdeckeln.

Aus der US 2003/0127884 A1 ist eine Sonnendachanordnung bekannt. Diese Anordnung soll einen Nachteil dahingehend überwinden, dass bei allgemein bekannten Sonnendachanordnungen eine Dichtung als dichtendes Bauteil zwischen einer ersten beweglichen Platte und einer zweiten beweglichen Platte vorhanden ist, welche sich in Fahrtrichtung hinter der ersten beweglichen Platte befindet. Bei derartigen Sonnendachanordnungen soll von Nachteil sein, dass derartige übliche Dichtungen, die den Spalt zwischen den beiden Platten überbrücken, nicht druckwasserbeständig sind und deshalb bei dem Waschen von Fahrzeugen, insbesondere mit hohem Wasserdruck, Wasser in den Innenraum des Fahrzeugs eintritt.

Zur Lösung dieses Problems schlägt die US 2003/0127884 A1 vor (Figur 4), an einer der Platten eine Aufnahme anzuformen, welche sich von einer querverlaufenden Stoßkante unterhalb der Glasplattenebene von der Stoßkante wegerstreckt, wodurch ein plattenartiges Auflager unterhalb der zweiten beweglichen Platte gebildet wird, wenn die Platten aneinander anstoßen. Auf diesem Auflager ist eine Dichtung aufgebracht, welche aus zwei voneinander beabstandeten, quer zur Stoßkante verlaufenden hohlen Dichtwulsten ausgebildet ist. Hierbei ist ein Dichtwulst benachbart zu der genannten Stoßkante angeordnet und der zweite Dichtwulst in geschlossenem Zustand des Daches unterhalb der zweiten beweglichen Glasplatte angeordnet. Zudem besitzt die zweite bewegliche Glasplatte unterseitig einen querverlaufenden Ansatz, der an dieser Platte angeformt ist. Dieser querverlaufende Ansatz liegt an einer, vom zweiten querverlaufenden Dichtwulst wegstehenden Dichtleiste bzw. Dichtlippe zusätzlich an. In geschlossenem Zustand ruht somit die zweite bewegliche Platte mittelbar über die Dichtung mit den zwei Dichtwulsten auf der Aufnahme der ersten beweglichen Platte. Bei einer solchen Anordnung ist von Nachteil, dass die zweite bewegliche Platte zur ersten beweglichen Platte vertikal relativ beweglich ist, da die Dichtungswulste durch die zweite bewegliche Platte zusammendrückbar sind. Dies bedeutet, dass eine vertikal fluchtende Ausrichtung der Platten aneinander schwer möglich ist und die zweite Platte auf der ersten Platte schwingt. Darüber hinaus ist nicht sichergestellt, dass die Dichtung bei sämtlichen Toleranzlagen (Wölbungstoleranzen der beiden Glasplatten) gegen Wasser und Geräusche zuverlässig abdichtet.

Um die Ausrichtung der Glasplatten aneinander zu verbessern, ist es bekannt, an der Aufnahme, die im geschlossenen Zustand unter einer der beweglichen Platten angeordnet ist und an der anderen Platte befestigt ist, ein Auflager auszubilden. Dieses Auflager ist aus geschäumten Material, insbesondere PU-Schaum, ausgebildet und stößt von unten gegen das Glas. Hierbei ist von Nachteil, dass unterseitig auf dem Glas angebrachte Schichten entfernt werden müssen, da sie ansonsten vom PU-Schaum abgerieben werden würden. Diese Schichten sind zum Beispiel Keramikschichten - sogenannte Fritten - die im Siebdruckverfahren auf das Glas aufgedruckt sind und im Bereich von Dichtungen den Durchtritt von Licht verhindern sollen, um ein Altern der Dichtung zu vermeiden.

Dies bedeutet aber auch, dass die Abstützung von außen durch das Glas sichtbar ist. Ferner entstehen durch den direkten Kontakt des PU-Schaums auf Glas Geräusche. Deshalb werden extra Dämpfungs- bzw. Reibelemente, insbesondere aus Teflon, erforderlich. Dies bedeutet einen deutlich höheren Montageaufwand und höhere Logistikkosten durch Materialmehraufwand und Materialbeschaffung etc.

Aufgabe der Erfindung ist es, die Ausrichtung von beweglichen Platten bzw. Deckeln eines Glasdachs mit zumindest zwei Glasdeckeln zu verbessern, die Dichtigkeit zu erhöhen und den Montage- und Logistikaufwand deutlich zu verringern.

Die Aufgabe wird mit den Merkmalen des Anspruchs 1 gelöst.

Vorteilhafte Weiterbildungen sind in Unteransprüchen gekennzeichnet.

Die Erfindung sieht vor, die Abstützung und Einstellung der Deckel zueinander, die sogenannte Schuppungseinstellung, in den randlichen Bereichen der Deckel bzw. Platten oder mittig (bereits im wasserführenden Bereich) auf der PU-An- bzw. -umschäumung zu realisieren. Zwischen dem so gebildeten Auflager der PU-Umschäumung und dem darauf aufliegenden Glasdeckel ist eine Zwischenlage aus Gummi vorgesehen. Hierfür wird eine vorhandene Gummidichtung, die den Stoßbereich zwischen den beiden Platten bzw. Deckeln von unten abdichtet, über die angeschäumten Auflager hinausgezogen, wobei die Gummidichtung hierfür in bestimmten Bereichen freigeschnitten wird. Zwischen zwei Auflagern, die in den seitlichen Bereichen angeordnet sind, wird die Dichtigkeit somit über eine übliche Hohlkammerdichtung gewährleistet. Um die Dichtigkeit weiter zu erhöhen und insbesondere die Dichtung bei sämtlichen Toleranzlagen (Wölbungstoleranzen der beiden Deckel) sicherzustellen, ist an der auf der Dichtung aufliegenden beweglichen Platte im Bereich der Stoßkante eine unterseitig Nase angeformt, welche auf der Dichtung aufliegt.

Bei der Erfindung ist von Vorteil, dass einfach und kostengünstig und mit geringem Montageaufwand eine zuverlässige Abdichtung sowie eine zuverlässige Schuppungseinstellung möglich sind, wobei die Auflager nicht als separate Bauteile sichtbar sind und so den Gesamteindruck stören könnten.

Die Erfindung wird anhand einer Zeichnung beispielhaft erläutert. Es zeigen dabei:
- Figur 1:: den Stoßbereich zwischen zwei Glasplatten bzw. Glas- deckeln eines Glasdachs in einer perspektivischen seitlichen Ansicht;
- Figur 2:: den Stoßbereich nach Figur 1 in einer stark schemati- sierten und geschnitten seitlichen Ansicht;
- Figur 3:: den Stoßbereich nach Figur 1 im Bereich der Abstüt- zung;

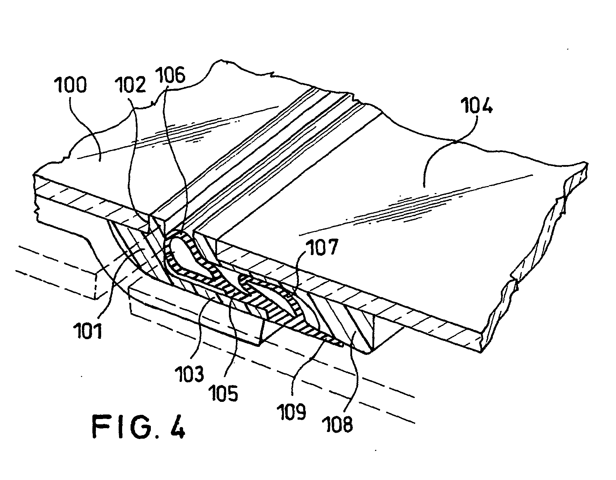

- Figur 4:: den Aufbau eines Sonnendachs im Stoßbereich nach dem Stand der Technik.

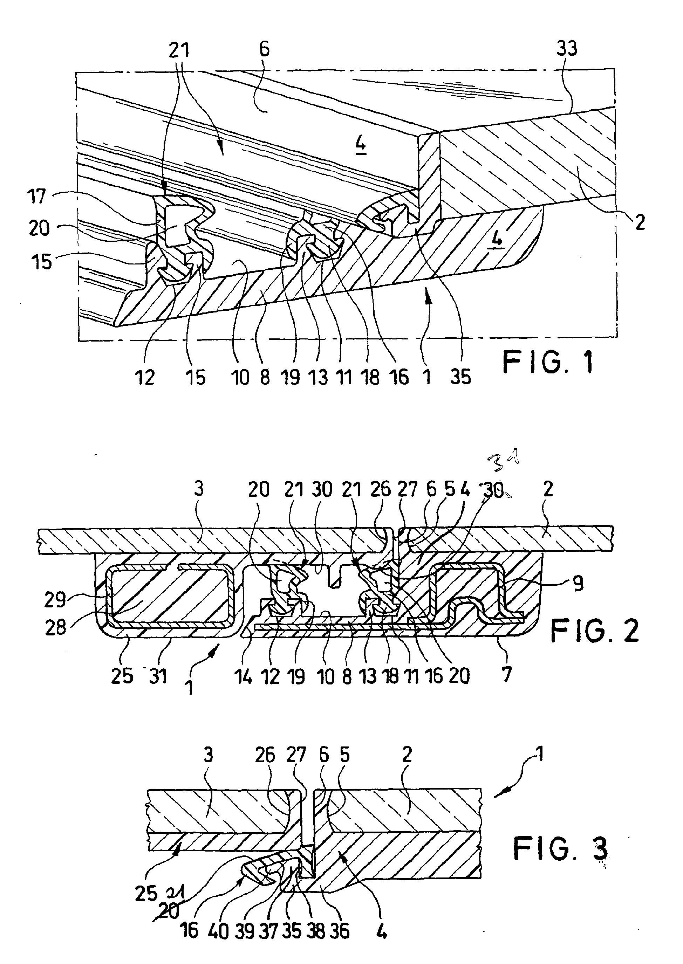

Ein erfindungsgemäßes Glasdach 1 (Figuren 1 bis 3) besitzt einen ersten, insbesondere hinteren Glasdeckel 2 und einen zweiten, insbesondere vorderen Glasdeckel 3.

Der Glasdeckel 2 besitzt eine Umschäumung 4, welche sich zumindest entlang einer ersten, quer zur Fahrzeugslängsrichtung verlaufenden Querkante 5 der Glasplatte bzw. des Glasdeckels 2 erstreckt. Derartige Umschäumungen 4 sind an sich bekannt und können sich entlang der querverlaufenden, aber auch entlang der längsverlaufenden Kanten eines Glasdeckels befinden und nehmen üblicherweise Funktionsteile, wie Führungen, auf. Die Umschäumung 4 und der Glasdeckel 2 sind einstückig ausgebildet, wobei von der Querkante 5 des Glasdeckels 2, ein geringeres Stück beabstandet, die Umschäumung 4 eine parallele Stoßkante 6 des Verbundes aus der Umschäumung 4 und dem Glasdeckel 2 ausbildet.

Unterhalb eines Bereichs entlang der Querkante 5 des Glasdeckels 2 bzw. der parallel verlaufenden Stoßkante 6 erstreckt sich in Flucht zur Stoßkante 6, die Umschäumung 4 von der Glasplatte 2 leistenförmig nach unten weg. Mit einer Bodenwandung 7 der Umschäumung 4 fluchtend, erstreckt sich eine einstückig angeformte und im Wesentlichen plattenartige Wasserrinne 8 von der leistenartigen Umschäumung 4 bzw. der Stoßkante 6, im Wesentlichen parallel zur Plattenebene des Glasdeckels 2 weg. Die Wasserrinne 8 und die Umschäumung 4 sind einstückig ausgebildet, wobei zur Stabilisierung der Umschäumung 4 und der Wasserrinne 8 ein einstückiger Stabilisierungsträger 9, insbesondere aus einem Metallblech, eingeschäumt ist.

Auf einer Oberseitenwandung 10 der Wasserrinne 8, welche ebenfalls im Wesentlichen parallel zur Plattenebene des Glasdeckels 2 ausgebildet ist, sind zwei Dichtungsaufnahmenuten 11 und 12 vorhanden.

Eine erste Dichtungsaufnahmenut 11 verläuft entlang der Stoßkante 6, wobei von der Stoßkante 6, um die Breite der Nut 11 beabstandet, von der Oberseitenwandung 11 eine Nutwandung 13 hochsteht. Die Nutwandung 13 und die Stoßkante 6 begrenzen somit die Nut 11 zwischen sich. Benachbart zu einer freien Längskante 14 der Wasserrinne 8 ist die zweite Dichtungsaufnahmenut 12 angeordnet, welche durch zwei die Nut 12 begrenzende hochstehende Wandungen 15 begrenzt wird. Die Nutwandungen 15, die Nutwandung 13 sowie die Stoßkante 6 sind hierbei parallel verlaufend angeordnet, was bedeutet, dass die Nutwandungen 13, 15 bzw. die Nuten 11, 12 quer zu einer Fahrzeuglängsachse verlaufen. Zwischen den Nuten 11, 12 ist der eigentliche Bereich zur Aufnahme und zum Abführen von eindringendem Wasser ausgebildet.

In die Nuten 11, 12 ist je eine Dichtung 16, 17 eingesetzt. Die Dichtung 16 ist eine Hohlkammerdichtung welche sich mit einem Befestigungsbereich 18 in die Nut 11 erstreckt. Der Befestigungsbereich 18 ist hierbei leistenartig korrespondierend zur Nut ausgebildet und besitzt vorzugsweise eine Konturierung, beispielsweise eine im Querschnitt pfeilförmige Konturierung, um ein Herausziehen der Dichtung 16 aus der Nut 11 zu erschweren.

Zudem besitzt die Dichtung 16 einen sich über die Nutwandung 13 herübererstreckenden und auf der der Nut 11 gegenüberliegenden Seite der Wandung 13 anliegenden Dichtungsstreifen 19, der bis zur Oberseitenwandung 10 der Wasserrinne 8 reicht. Oberhalb der Nut 11 verbreitert sich die Dichtung 16 von der Stoßkante 6 weg, wobei oberhalb der Nut 11 eine Hohlkammer 20 in der Dichtung ausgebildet ist.

Oberseitig schließt die Dichtung 16 mit einer leicht schräg verlaufenden und leicht gewölbten Auflagerwandung 21 ab, welche einerseits an der Stoßkante 6 anliegt und von der Stoßkante 6 abfallend in Richtung der Wasserrinne 8 weist. Die Auflagerwandung 21 besitzt dabei eine Breite, die von der Stoßkante 6 bis etwas über die Breite der Nut 11 inklusiv nutbegrenzender Wandung 13 reicht. Die Dichtung 16 schließt an der Stoßkante 6 mit der Auflagerwandung 21 etwas unterhalb einer unteren Fläche des Glasdeckels 2 ab.

Der zweite Glasdeckel 3 besitzt ebenfalls eine Umschäumung 25. Die Umschäumung 25 bildet im Bereich einer Querkante 26, des Glasdeckels 3, gering beabstandet von dieser Querkante 26 eine der Stoßkante 6 gegenüberliegende und zu dieser parallel verlaufende Stoßkante 27. Die Umschäumung 25 erstreckt sich von dieser Stoßkante 27 unterhalb und entlang des Glasdeckels 3 und bildet beabstandet von der Stoßkante 27 eine parallel zur Stoßkante 27 verlaufende, im Querschnitt quaderförmige Leiste 28. Zur Stabilisierung der angeschäumten Leiste 28 kann ebenfalls eine Stabilisierung 29 aus einem Metallblech 29 vorhanden und insbesondere eingeschäumt sein. Der Abstand von der Stoßkante 27 bis zur Leiste 28 entspricht in etwa dem Abstand der Stoßkante 6 bis zur freien Querkante 14 der Wasserrinne, so dass in einem Zustand, bei dem Stoßkante 27 an der Stoßkante 6 anliegt, das heißt einem vollständig geschlossenen Zustand des Glasdaches 1, die querverlaufende Kante 14 an der Leiste 28 anliegt.

Im unteren Bereich der Stoßkante 27, in dem die Stoßkante 27 in eine parallel zum Glasdeckel 3 verlaufende Fläche 30 übergeht, ist an der Umschäumung 25 eine nach unten über die Fläche 30 vorstehende Nase 31 ausgebildet. Die Anschäumung 25 besteht ebenfalls aus einem Polymerschaum, vorzugsweise einem Polyurethanschaum. Eine untere Fläche 32 der Leiste 28 schließt in geschlossenem Zustand vorzugsweise mit der unteren Fläche 7 der Umschäumung 4 ab.

In den randlichen Bereichen entlang der Längskanten 33 des Glasdeckels 2 und des Glasdeckels 3 sind die Umschäumungen 4, 25 bzw. die Wasserrinne 28 freigespart, so dass die Glasdeckel 2, 3 beidseitig unterhalb ihrer Längskanten 33 und unterhalb dieser Längskantenbereiche vorhandene Führungsschienen (nicht gezeigt) eines Glasdachrahmens, der in einem Fahrzeugdach eingebaut ist, überspannen können. Die Wasserrinne 8 erstreckt sich somit zwischen diesen beiden Führungsschienen bzw. der entsprechenden Mechanik, während die Glasdeckel 2, 3 diese Führungsschienen von oben abdecken.

Die Führungsschienen und die Wasserrinne 8 wirken dabei derart zusammen, dass durch den Stoßbereich zwischen den Stoßkanten 6 und 27 hindurchtretendes Wasser, welches in die Wasserrinne 8 gelangt, nach außen in den Bereich der Führungsschienen bzw. der entsprechenden Mechanik abgeleitet wird.

Im Bereich der Führungsschienen bzw. in dem Bereich, in dem der Glasdeckel 2 die Führungsschienen überspannt bzw. abdeckt und die Wasserrinne 8 freigespart ist, bildet die Umschäumung 4 je ein Auflager 35 aus. Das Auflager 35 erstreckt sich dabei unterhalb des Glasdeckels 2 von der Stoßkante 6 weg, wobei eine ebene Bodenwandung 36 gebildet ist und sich von der Bodenwandung 36 eine Auflagerleiste 37, mit Abstand zur Stoßkante 6, parallel zur Stoßkante 6 nach oben erstreckt.

Zwischen der Auflagerleiste 37 und der Stoßkante 6 wird durch den Abstand eine parallel zur Stoßkante 6 verlaufende Nut 38 gebildet. Die Auflagerleiste 37 schließt oberseitig mit einer Auflagerfläche 39 ab. Die Auflagerfläche 39 erstreckt sich von der Nut 38 oberseitig leicht gewölbt und abfallend von der Nut 38 weg und bildet eine über die Auflagerleiste 37 vorstehende Nase 40 aus.
Das Auflager 35 ist dabei so ausgebildet, dass die Auflagerfläche 39 so angeordnet ist, dass sie sich im Bereich der Dichtungshohlkammer 20 derart befindet, dass die Auflagerfläche 39 auf Höhe der Innenseite der Dichtungsauflagerwandung 21 angeordnet ist. Um das Auflager 35 oberseitig abzudecken, ist die Dichtung 16 im Bereich der Hohlkammer 20 derart freigespart bzw. freigeschnitten, dass lediglich die Auflagerwandung 21 sowie ein Teil der Dichtungswandung, die an der Stoßkante 6 anliegt, verbleiben.

Der letztere Wandungsabschnitt der Dichtung 16 wird in der Nut 38 weitergeführt, während die Dichtungsauflagerwandung 21 oberseitig auf der Auflagerfläche 39 des Auflagers 35 aufliegt. Hierdurch ist es möglich, die Dichtung 16 auch den Bereich der Auflager 35 überspannen zu lassen, so dass als Zwischenlage für das Auflager 35 gleichzeitig die Dichtung 16 dient, die im Bereich der Wasserrinne 8 für eine Abdichtung des Stoßbereiches zwischen der Stoßkante 27 und der Stoßkante 6 sorgt.

Durch diese durchgehende Dichtung wird sowohl im Bereich der Wasserrinne 8 als auch im Bereich der die Wasserrinne 8, seitlich begrenzenden Auflager 35 eine besonders gute Dichtwirkung erzielt, da zwischen einer Zwischenlage des Auflagers 35 und der Dichtung im Bereich der Wasserrinne kein Spalt entsteht.

Darüber hinaus ist von Vorteil, dass kein gesondertes Bauteil als Zwischenlage zwischen dem Auflager 35 und der Umschäumung 25 des Glasdeckels 3 vorgesehen werden muss.

Im Bereich der Auflager 35 bzw. der freigeschnitten Dichtung 16 schließen die Unterseite 30 der Umschäumung 25 und die Stoßkante 27 einen im Wesentlichen rechten Winkel ein, so dass in diesem Bereich keine Nase 31 gebildet ist, die im Bereich der Auflager 35 nicht benötigt wird.

In der zweiten Nut 12 ist die Dichtung 17 angeordnet, welche zur Dichtung 16 identisch ausgebildet ist, jedoch mit ihrer abfallenden Auflagerwandung 21 der Dichtung 16 zugewandt ist.

Die Dichtung 17 erstreckt sich jedoch lediglich im Bereich der Wasserrinne 8, und nicht seitlich über die Wasserrinne 8 hinaus.

Die Dichtung 16 bzw. die Dichtungen 16, 17 können auch neben der Wasserrinne 8 bzw. der Stoßkante 6 aufgeklebt sein, so dass separate Nuten 11, 12 entfallen können.

Bei der Erfindung ist von Vorteil, dass eine an einem Glasdeckel angeschäumte Wasserrinne und die für die Einstellung der Schuppung notwendigen Auflagen einstückig an einem Glasdeckel angeordnet und insbesondere angeschäumt sind, wobei die seitlich neben der Wasserrinne angeordneten Auflagen so ausgebildet sind, dass eine Dichtung, zum Dichten des Stoßbereiches zwischen zwei Glasdeckeln mit, einer Dichtungsoberseite über die Wasserrinne hinaus auf die Auflager weitergeführt wird und somit eine doppelte Funktion als Dichtung im Bereich der Wasserrinne und Zwischenlage der Auflager erfüllt. Hierdurch können Montageschritte und damit Kosten für separate Bauteile und den Logistikaufwand eingespart werden.

Durch das Vorsehen einer unterseitigen Nase, welche im Bereich der Wasserrinne auf die Dichtung im Stoßbereich zwischen den beiden Glasdeckeln einwirkt, ist es auch möglich, beim Verkippen der Glasdeckel zueinander bzw. bei unterschiedlichen Toleranzlagen bezüglich der Wölbungstoleranz der beiden Deckel, eine zuverlässige Dichtung gegen Wasser und Geräusche zu erzielen. Der Druck zwischen dem abzudichtenden Bauteil, nämlich dem Glasdeckel und dem Dichtungswulst, wird punktuell erhöht, und auch bei unterschiedlichen Kippwinkeln wird der Druck nicht verringert.

Die Erfindung ist dabei nicht darauf beschränkt, dass die Auflager im Bereich einer sich jeweils unter den Auflagern befindlichen Führungsschiene oder sonstigen Mechanik des Schiebedachs angeordnet sind. Derartige Auflager oder eine derartige Auflage kann beispielsweise zusätzlich im Bereich der Wasserrinne vorgesehen sein, welches durch eine entsprechende Anschäumung einfach zu realisieren ist. Dementsprechend wird dann in diesem Bereich eine entsprechende Freischneidung der Dichtung vorgenommen. Entlang des Stoßbereichs der Stoßkanten zweier Glasdeckel können ein oder mehrere Auflager vorgesehen sein. Derartige Auflager sind selbstverständlich nicht auf quer zur Fahrzeugrichtung verlaufende Stoßbereiche beschränkt, sondern können selbstverständlich in jedem Stoßbereich der auf erfindungsgemäße Weise abgedichtet wird, vorgesehen sein.

Dementsprechend ist die Erfindung auch nicht auf die Verwendung in Glasdächern beschränkt, sondern kann überall dort mit Vorteil angewandt werden, wo zwei zueinander bewegliche Bauteile einen gemeinsamen Stoßbereich bilden, der abgedichtet werden muss und wobei das eine Bauteil von dem anderen Bauteil abgestützt werden soll.

### Bezugszeichenliste:

- 1: Glasdach
- 2: erster Deckel
- 3: zweiter Deckel
- 4: Umschäumung
- 5: Querkante von 2
- 6: Stoßkante von 2
- 7: Bodenwandung von 4
- 8: Wasserrinne
- 9: Stabilisierungsträger
- 10: Oberseitenwandung
- 11: Dichtungsaufnahmenut
- 12: Dichtungsaufnahmenut
- 13: Nutwandung
- 14: freie Längskante
- 15: Nutwandungen
- 16: Dichtung
- 17: Dichtung
- 18: Befestigungsbereich
- 19: Dichtungsstreifen
- 20: Hohlkammer
- 21: Auflagerwandung
- 22:
- 23:
- 24:
- 25: Umschäumung
- 26: Querkante
- 27: Stoßkante
- 28: Leiste
- 29: Stabilisierung
- 30: unterseitige Fläche
- 31: Nase
- 32: untere Fläche der Leiste 28
- 33: Längskante
- 34:
- 35: Auflager
- 36: Bodenwandungsbereich
- 37: Auflagerleiste
- 38: Nut
- 39: Auflagerfläche
- 40: Nase

## Patentansprüche

1. Glasdach (1) mit zumindest zwei Glasdeckeln (2, 3), wobei die Glasdeckel (2, 3) mit zueinander weisenden Stoßkanten (6, 27) ausgebildet sind und an einem Glasdeckel (2) entlang einer Stoßkante (6) eine Anformung (4) vorhanden ist, wobei sich die Anformung (4) unterhalb des Glasdeckels (2) von der Stoßkante (6) wegerstreckt und die Anformung (4) benachbart zur Stoßkante (6) zur Abdichtung des Stoßbereichs zwischen den beiden Glasdeckeln (2, 3) eine Dichtung (16) aufnimmt, wobei sich die Dichtung (16) von einer Oberseitenwandung (10)der Anformung (4) in Richtung zu einer Glasdeckelunterseite hin erstreckt und oberseitig eine Auflagerwandung (21) für den zweiten Glasdeckel (3) ausbildet
**dadurch gekennzeichnet, dass**
mindestens ein Auflager (35) für den zweiten Glasdeckel (3) vorhanden ist und die Dichtung (16) mit ihrer vom Dichtungskörper freigeschnittenen Auflagerwandung(21) derart auf dem Auflager (35) aufliegt, dass zwischen dem zweiten Glasdeckel (3) und dem Auflager (35) eine Zwischenschicht ausgebildet ist.

2. Glasdach nach Anspruch 1, **dadurch gekennzeichnet, dass** die Anformung (4) und die Auflager (35) einstückig ausgebildet sind.

3. Glasdach nach Anspruch 1 oder 2, **dadurch gekennzeichnet, dass** die Anformung (4) und das Auflager (35) angeschäumt sind und aus einem Polymerschaum ausgebildet sind.

4. Glasdach nach einem der vorhergehenden Ansprüche, **dadurch gekennzeichnet, dass** die Auflager (35) beidseitig neben einer durch die Anformung (4) ausgebildeten Wasserrinne (8) ausgebildet sind, wobei im Bereich der Auflager (35) die Wasserrinne (8) bzw. die Wasserrinne bildende Anformung (4) freigespart ist.

5. Glasdach nach einem der vorhergehenden Ansprüche, **dadurch gekennzeichnet, dass** der zweite Glasdeckel (3) im Bereich der Stoßkante (27) eine unterseitig vorstehende Nase (31) zur Auflage auf der Auflagerwandung (21) besitzt, welche sich entlang der Länge der Stoßkante (27) im Bereich einer darunterliegenden Wasserrinne (8) erstreckt.

6. Glasdach nach einem der vorhergehenden Ansprüche, **dadurch gekennzeichnet, dass** die Dichtung (16) im Bereich der Wasserrinne (8) als Hohlkammerdichtung mit einer unter der Auflagefläche (21) und von dieser oberseitig begrenzten Hohlkammer (20) ausgebildet ist, wobei das Auflager (35) so ausgebildet und angeordnet ist, dass die Auflagerfläche (39) im Bereich der Dichtungshohlkammer (20) derart angeordnet ist, dass sich die Auflagerfläche (39) auf Höhe der Innenseite der Dichtungsauflagerwandung (21) befindet und zum oberseitigen Abdecken des Auflagers (35) die Dichtung (16) im Bereich der Hohlkammer (20) derart freigespart bzw. freigeschnitten ist, dass die Auflagerwandung (21) die Auflagerfläche (39) im Bereich des Auflagers (35) überspannt.

7. Glasdach nach einem der vorhergehenden Ansprüche, **dadurch gekennzeichnet, dass** im Bereich des oder der Auflager (35) bzw. der freigeschnitten Dichtung (16) die Unterseite (30) einer Umschäumung (25) des zweiten Glasdeckels (3) und die Stoßkante (27) des zweiten Glasdeckels (3) einen im Wesentlichen rechten Winkel einschließen, so dass in diesem Bereich eine ebene Auflage auf dem Auflager (35) bzw. der Auflagerwandung (21) gebildet ist.

8. Glasdach nach einem der vorhergehenden Ansprüche, **dadurch gekennzeichnet, dass** parallel zur Dichtung (16) und bezüglicher der Wasserrinne (8) der Dichtung (16) gegenüberliegend eine zweite Dichtung (17) vorhanden ist, welche sich entlang der Wasserrinne (8) erstreckt.

9. Glasdach nach einem der vorhergehenden Ansprüche, **dadurch gekennzeichnet, dass** das oder die Auflager (35) im Bereich der Wasserrinne (8) ausgebildet sind.

10. Glasdach nach einem der vorhergehenden Ansprüche, **dadurch gekennzeichnet, dass** die Dichtung (16) oder die Dichtungen (16, 17) in Nuten (11, 12) befestigend gelagert oder mittels Klebungen benachbart zur Wasserrinne (8) und/oder an den Stoßkanten befestigt sind.

## Claims

1. Glass roof (1) with at least two glass covers (2, 3), wherein the glass covers (2, 3) are designed with mutually facing abutting edges (6, 27) and a formed-on part (4) is present on one glass cover (2) along an abutting edge (6), wherein the formed-on part (4) extends away from the abutting edge (6) below the glass cover (2) and the formed-on part (4) accommodates a seal (16) adjacent to the abutting edge (6) to seal the abutment region between the two glass covers (2, 3), wherein the seal (16) extends from an upper side wall (10) of the formed-on part (4) in the direction of a glass cover underside and forms on the upper side a support wall (21) for the second glass cover (3), **characterized in that** at least one support (35) for the second glass cover (3) is present and the seal (16) bears, by way of its support wall (21) cut free from the sealing body, on the support (35) in such a way that an intermediate layer is formed between the second glass cover (3) and the support (35).

2. Glass roof according to Claim 1, **characterized in that** the formed-on part (4) and the supports (35) are formed in one piece.

3. Glass roof according to Claim 1 or 2, **characterized in that** the formed-on part (4) and the support (35) are foamed and are formed from a polymer foam.

4. Glass roof according to one of the preceding claims, **characterized in that** the supports (35) are formed on both sides next to a water channel (8) formed by the formed-on part (4), wherein the water channel (8), or the formed-on part (4) forming the water channel, is relieved in the region of the supports (35).

5. Glass roof according to one of the preceding claims, **characterized in that** the second glass cover (3) has, in the region of the abutting edge (27), a lug (31) projecting on the underside for supporting on the support wall (21), which extends along the length of the abutting edge (27) in the region of a water channel (8) situated underneath it.

6. Glass roof according to one of the preceding claims, **characterized in that** the seal (16) is formed, in the region of the water channel (8), as a hollow-chamber seal with a hollow chamber (20) delimited under the support surface (21) and on the upper side by the latter, wherein the support (35) is formed and arranged in such a way that the support surface (39) is arranged in the region of the seal hollow chamber (20) such that the support surface (39) is situated at the level of the inner side of the seal support wall (21) and, in order to cover the support (35) on the upper side, the seal (16) is relieved or cut free in the region of the hollow chamber (20) in such a way that the support wall (21) spans the support surface (39) in the region of the support (35).

7. Glass roof according to one of the preceding claims, **characterized in that**, in the region of the support or supports (35) or of the cut-free seal (16), the underside (30) of a foam encapsulation (25) of the second glass cover (3) and the abutting edge (27) of the second glass cover (3) form a substantial right angle such that in this region a planar base is formed on the support (35) or the support wall (21).

8. Glass roof according to one of the preceding claims, **characterized in that** a second seal (17) which extends along the water channel (8) is present parallel to the seal (16) and opposite the seal (16) with respect to the water channel (8).

9. Glass roof according to one of the preceding claims, **characterized in that** the support or supports (35) are formed in the region of the water channel (8).

10. Glass roof according to one of the preceding claims, **characterized in that** the seal (16) or the seals (16, 17) are mounted fixedly in grooves (11, 12) or are fastened by means of adhesive bonds adjacent to the water channel (8) and/or are fastened to the abutting edges.

## Revendications

1. Toit en verre (1) comprenant au moins deux couvercles de verre (2, 3), les couvercles de verre (2, 3) étant réalisés avec des arêtes de butée (6, 27) tournées l'une vers l'autre et une formation (4) étant prévue sur un couvercle de verre (2) le long d'une arête de butée (6), la formation (4) s'étendant sous le couvercle de verre (2) à l'écart de l'arête de butée (6), et la formation (4) recevant un joint d'étanchéité (16) à côté de l'arête de butée (6) pour l'étanchéité de la région de butée entre les deux couvercles de verre (2, 3), le joint d'étanchéité (16) s'étendant depuis une paroi du côté supérieur (10) de la formation (4) dans la direction d'un côté inférieur du couvercle de verre et formant du côté supérieur une paroi d'appui (21) pour le deuxième couvercle de verre (3),
**caractérisé en ce que**
l'on prévoit au moins un appui (35) pour le deuxième couvercle de verre (3) et le joint d'étanchéité (16) repose avec sa paroi d'appui (21) dégagée du corps d'étanchéité sur l'appui (35) de telle sorte qu'entre le deuxième couvercle de verre (3) et l'appui (35) soit réalisée une couche intermédiaire.

2. Toit en verre selon la revendication 1, **caractérisé en ce que** la formation (4) et l'appui (35) sont réalisés d'une seule pièce.

3. Toit en verre selon la revendication 1 ou 2, **caractérisé en ce que** la formation (4) et l'appui (35) sont moussés et sont réalisés en une mousse polymère.

4. Toit en verre selon l'une quelconque des revendications précédentes, **caractérisé en ce que** les appuis (35) sont réalisés des deux côtés à côté d'une rigole d'eau (8) constituée par la formation (4), la rigole d'eau (8) ou la formation (4) constituant la rigole d'eau étant dégagée dans la région des appuis (35).

5. Toit en verre selon l'une quelconque des revendications précédentes, **caractérisé en ce que** le deuxième couvercle de verre (3) possède, dans la région de l'arête de butée (27), un nez (31) saillant vers le bas, destiné à reposer sur la paroi d'appui (21), qui s'étend le long de la longueur de l'arête de butée (27) dans la région d'une rigole d'eau (8) sous-jacente.

6. Toit en verre selon l'une quelconque des revendications précédentes, **caractérisé en ce que** le joint d'étanchéité (16) est réalisé dans la région de la rigole d'eau (8) sous forme de joint d'étanchéité à chambre creuse avec une chambre creuse (20) sous la surface d'appui (21) et limitée par celle-ci du côté supérieur, l'appui (35) étant réalisé et conçu de telle sorte que la surface d'appui (39) soit disposée dans la région de la chambre creuse d'étanchéité (20) de telle sorte que la surface d'appui (39) se trouve à la hauteur du côté intérieur de la paroi d'appui d'étanchéité (21) et que pour recouvrir du côté supérieur l'appui (35), le joint d'étanchéité (16) soit dégagé ou évidé dans la région de la chambre creuse (20) de telle sorte que la paroi d'appui (21) s'étende au-dessus de la surface d'appui (39) dans la région de l'appui (35).

7. Toit en verre selon l'une quelconque des revendications précédentes, **caractérisé en ce que** dans la région du ou des appuis (35) ou du joint d'étanchéité dégagé (16), le côté inférieur (30) d'un moussage (25) du deuxième couvercle de verre (3) et l'arête de butée (27) du deuxième couvercle de verre (3) forment un angle essentiellement droit, de sorte que dans cette région, un appui plan soit réalisé sur l'appui (35) ou la paroi de l'appui (21).

8. Toit en verre selon l'une quelconque des revendications précédentes, **caractérisé en ce que** parallèlement au joint d'étanchéité (16) et en regard de la rigole d'eau (8) du joint d'étanchéité (16), est prévu un deuxième joint d'étanchéité (17), qui s'étend le long de la rigole d'eau (8).

9. Toit en verre selon l'une quelconque des revendications précédentes, **caractérisé en ce que** le ou les appuis (35) sont réalisés dans la région de la rigole d'eau (8).

10. Toit en verre selon l'une quelconque des revendications précédentes, **caractérisé en ce que** le joint d'étanchéité (16) ou les joints d'étanchéité (16, 17) sont montés de manière fixative dans des rainures (11, 12) ou sont fixés au moyen de collages à côté de la rigole d'eau (8) et/ou contre les arêtes de butée.
